# EUROPEAN PATENT SPECIFICATION

(11) **EP 1 812 719 B1**
(45) Date of publication and mention of the grant of the patent: **16.05.2012**
(21) Application number: 05858505.0
(22) Date of filing: 25.07.2005
(51) Int. Cl.: F16B 15/06

(54) **PIN FASTENER FOR ACHIEVING METAL-TO-METAL CONNECTIONS**
STIFTBEFESTIGUNG ZUM ERZIELEN VON METALL-METALL-VERBINDUNGEN
ATTACHE DE FIXATION A BROCHE PERMETTANT DE REALISER DES CONNEXIONS METAL-METAL

(30) Priority: 26.07.2004 US 898756; 20.04.2005 US 109794
(43) Date of publication of application: 01.08.2007
(73) Proprietor: Illinois Tool Works Inc., Glenview, IL 60026 (US)
(72) Inventor: DILL, Michael, C., Elk Grove Village, IL 60007 (US); KOLODZIEJ, Norbert, K., Park Ridge, IL 60068 (US)
(74) Representative: Finnie, Peter John
(86) International application number: PCT/US2005/026250
(87) International publication number: WO 2007/043985

(56) References cited:
- FR-A- 1 115 028
- JP-A- 59 099 103
- US-A- 2 256 401
- US-A- 2 269 708
- US-A- 5 741 104
- US-A1- 2002 071 741

## Description

### FIELD OF THE INVENTION

The present invention relates generally to fasteners for connecting, attaching, or fastening different structural components to each other, and more particularly to new and improved fasteners which have been specifically developed in accordance with the principles and teachings of the present invention in order to readily, easily, and quickly achieve the connection, attachment, or fastening together of metal stud members to metal track members during the construction, installation, or erection of, for example, room wall members within residential, commercial, or industrial building structures, wherein the unique and novel structure characteristic of the present invention fastener comprises a forwardly extending pointed tip portion having a configuration or shape so as to facilitate the fast and accurate penetration of the fastener into and through the thin gauge sheet metal components, comprising the metal stud members and the metal track members, without causing any excessive enlargement of the holes or apertures formed or defined therein, and a shank portion which comprises a lower, spiral thread shank portion which continues to facilitate the ease of penetration of the fastener into and through the thin gauge sheet metal components, as initiated by means of the pointed tip portion, and at the same time causes a mating thread to effectively be extruded within the thin gauge sheet metal components so as to effectively develop or generate enhanced surface areas or regions for ultimate contact with the upper shank portion of the fastener when the fastener is fully driven and seated within the thin gauge sheet metal components.

In accordance with an embodiment of the fastener of the present invention, a plurality of nibs are interposed

between successive ones of the spiral threads, which are continued from the lower shank portion onto the upper shank portion, so as to significantly enhance the clamping forces and pull-out resistance values of the fastener with respect to the thin gauge sheet metal members.

### BACKGROUND OF THE INVENTION

Various different type of tools, and various different types of fasteners, are of course well known and utilized within the building industry in order to accomplish various different construction, installation, or erection operations or procedures, such as, for example, the construction or erection of interior or exterior wall stud frameworks, grids, matrices, or the like, and the installation of interior wall board members onto such interior or exterior wall stud frameworks, grids, matrices, or the like. Interior or exterior wall stud frameworks, grids, matrices, or the like, comprise, for example, a lower track member which may be fabricated from wood or relatively thin gauge sheet metal and which is adapted to be fixedly attached or secured to a floor member which is often fabricated from concrete, an up-per track member which may likewise be fabricated from wood or relatively thin gauge sheet metal and which is adapted to be fixedly attached or secured to ceiling members which often comprise wooden beams or joists, concrete slabs, or the like, and a plurality of stud members which are adapted to be disposed within vertical planes so as to effectively define support structures for the vertically oriented interior or exterior wall board members which will therefore, in turn, define the interior or exterior wall structures. The stud members may also be fabricated from relatively thin gauge sheet metal or wood and are adapted to be fixedly attached or secured to the upper and lower track members. The stud members may extend vertically so as to be disposed perpendicular to the upper and lower track members, or they may extend at angular or parallel orientations with respect to the upper and lower track members so as to effectively define cross-bracing within the stud frameworks, grids, matrices, or the like.

It can therefore be readily appreciated, depending upon the particular members, comprising the overall stud matrix, framework, grid, or the like, that are to be fixedly attached or secured together, that various different material-to-material connections or interfaces will be defined and will therefore embody various different installation parameters, characteristics, techniques, and the like. For example, it can be appreciated that when the lower track members are to be fixedly attached or secured to the floor member, wood-to-concrete or sheet metal-to-concrete material-to-material connections or interfaces will be defined, whereas when the upper track members are to be fixedly attached or secured to the ceiling members, wood-to-wood, wood-to-concrete, sheet metal-to-wood, or sheet metal-to-concrete material-to-material connections or interfaces will be defined. Still further, when the stud members are to be fixedly attached or secured to the upper and lower track members, wood-to-wood, sheet metal-to-wood, wood-to-sheet metal, or sheet-metal-to-sheet metal material-to-material connections or interfaces will be defined. Accordingly, it can be appreciated still further that, in view of the various different material-to-material connections or interfaces defined between the various different structural members comprising or defining the overall stud framework, grid, matrix, or the like, various different power tools, characterized, for example by means of various different power levels, and various different fasteners, characterized, for example, by various different structural features, will be used in order to fixedly attach or secure the various different structural members together. One such fastener is known from United States Patent 2,269,708 which issued to R.B. Dickson on January 13, 1942.

More particularly, it is to be noted further, in connection with the fixation or the securing of various different structural members to other different structural members, such as, for example, the fixation or the securing of the relatively thin gauge sheet metal upper and lower track members to the floor and ceiling members, as well as the fixation or the securing of the relatively thin gauge sheet metal studs to the relatively thin gauge sheet metal upper and lower track members, that various different options are available to construction and installation personnel, operators, workmen, or the like, in connection with the particular tools and fasteners to be selected in order to in fact perform or achieve the installation, construction, or erection of the aforenoted interior or exterior wall structure frameworks, grids, matrices, or the like, comprising such upper and lower track members, and the interconnected stud members. For example, different tools are currently available upon the market which are powered by means of different power sources and which generate different power levels, that is, the tools may comprise gas or combustion-powered tools, pneumatically-powered tools, powder technology tools, electrically-powered tools, and the like. In addition, different fasteners are currently available upon the market which are designed to be used in conjunction with particularly powered tools or implements. For example, various different nails, brads, pins, or the like, may be utilized as a result of being installed by means of suitable nail guns, or the like, or alternatively, various different threaded screw-type fasteners may be utilized as a result of being installed by means of suitable rotary drive tools.

Important criteria to be considered in connection with the selection of specific tools and fasteners for performing, accomplishing, and achieving particular installation, construction, or erection operations, comprise the speed and ease of installation of the fasteners, the pull-out resistance of the fasteners, and the maintenance of the structural integrity of the various different structural components comprising the framework, grid, or matrix. Speed of installation is an important factor because enhanced speed of installation directly affects a contractor's labor costs. Ease of installation is likewise an important factor because facilitating the installation of the fasteners is less fatiguing for the installation or construction personnel, operators, or workmen. Structural integrity of the various different structural components comprising the framework, grid, or matrix is submitted to be self-evident in that if the structural integrity of the various different structural components defining or comprising the framework, grid, or matrix is in fact compromised during installation, construction, or erection of the framework, grid, or matrix, then the structural integrity and service life of the resulting framework, grid, or matrix would obviously be adversely or deleteriously affected. These factors are particularly important in connection with the installation of relatively thin gauge sheet metal structural components. The reason for this is that it is relatively difficult to properly install fasteners within relatively thin gauge sheet metal structural components, such as, for example, the relatively thin gauge sheet metal studs and the relatively thin gauge sheet metal upper and lower track members, so as to properly install and connect the relatively thin gauge sheet metal upper and lower track members to the floor and ceiling members, as well as to install and connect the relatively thin gauge sheet metal studs to the relatively thin gauge sheet metal upper and lower track members. When, for example, fasteners are installed within relatively thin gauge sheet metal components by means of suitable nail-type installation guns or the like, care must be taken to properly control the power level of the installation tools. More particularly, if the power level of the installation tool is too low, the fasteners will not be able to be properly driven into the relatively thin-gauge sheet metal comprising the stud and track members. Alternatively, if the power level of the installation tool is too high, the relatively thin gauge sheet metal structural components may be damaged, and in addition, the holes generated within the relatively thin gauge sheet metal components may be overly large whereby the holding strength and pull-out resistance of the fasteners will be significantly compromised.

Accordingly, a need exists in the art for a new and improved fastener for attaching relatively thin gauge sheet metal stud members to relatively thin gauge sheet metal track members in a relatively fast and easy manner without adversely or deleteriously affecting the structural integrity of the relatively thin gauge sheet metal stud members or the relatively thin gauge sheet metal track members, and for concomitantly enhancing and preserving the clamping forces and pull-out resistance of the fasteners with respect to the relatively thin gauge sheet metal stud and track members.

### SUMMARY OF THE INVENTION

The foregoing and other objectives are achieved in accordance with the teachings and principles of the present invention through the provision of a fastener for fastening together a pair of thin gauge sheet metal members, comprising:
a pointed end portion for forming apertures within the thin gauge sheet metal members as said fastener is inserted through the thin gauge sheet metal members;
a head portion; and
a shank portion interposed between said pointed end portion and said head portion and defined around a longitudinal axis;
wherein said shank portion comprises a spiral-threaded shank portion extending from a first axial position, disposed immediately upstream of said pointed end portion, to a second axial position substantially adjacent to said head portion, and comprising a plurality of circumferentially spaced spiral threads disposed upon said spiral-threaded shank portion such that each one of said plurality of circumferentially spaced spiral threads extends substantially from said first axial position to said second axial position, and at a predetermined angle with respect to said longitudinal axis of said shank portion, for forming corresponding threads upon annular wall portions of the thin gauge sheet metal members, which surround the apertures defined within the thin gauge sheet metal members, as a result of the insertion of said pointed end portion of said fastener through the thin gauge sheet metal members, and a plurality of substantially linear arrays of nibs formed upon said plurality of circumferentially spaced spiral threads disposed upon said spiral-threaded shank portion, for engaging the annular wall portions of the thin gauge sheet metal members which surround the apertures defined within the thin gauge sheet metal members so as to effectively lock said fastener within the thin gauge sheet metal members and enhance the pull-out resistance of said fastener with respect to the thin gauge sheet metal members so as to securely fasten the thin gauge sheet metal members together,
characterised in that the plurality of substantially linear arrays of nibs are formed only upon axially rearward regions of said plurality of circumferentially spaced spiral threads, disposed upon said spiral-threaded shank portion, which extend from a third axial portion intermediate said first and second axial positions, to said second axial position substantially adjacent to said head portion.

### BRIEF DESCRIPTION OF THE DRAWINGS

Various other features and attendant advantages of the present invention will be more fully appreciated from the following detailed description when considered in connection with the accompanying drawings in which like reference characters designate like or corresponding parts throughout the several views, and wherein:

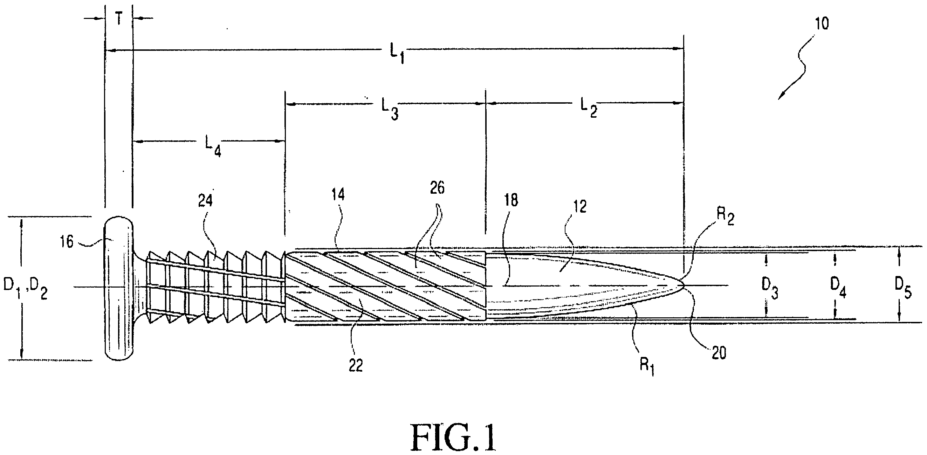

**FIGURE 1** is an enlarged side elevational view of a comparative example of a fastener, which does not form a part of the present invention, and illustrating the cooperative parts there-of, including spiral-threaded and annularly fluted shank portions, which is uniquely adapted for insertion into thin gauge sheet metal members so as to secure thin gauge sheet metal members together, such as, for example, vertically oriented thin gauge sheet metal wall stud members to horizontally oriented, upper and lower thin gauge sheet metal track members, so as to form, for example, framework structures on-to which wall boards are to be secured;

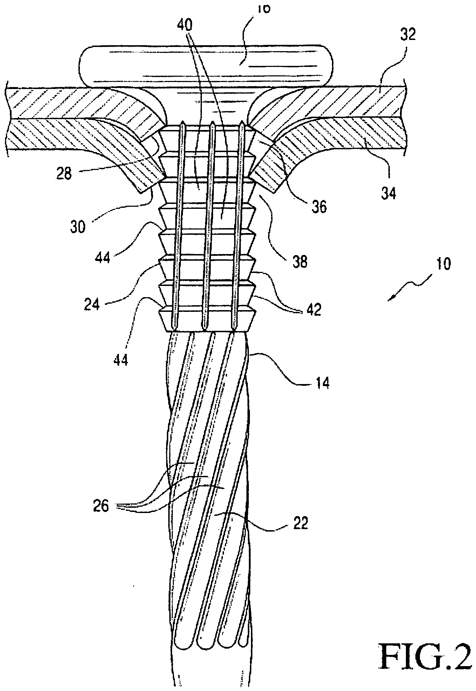

**FIGURE 2** is an enlarged side elevational view of the comparative example of the fastener, as disclosed within **FIGURE 1**, wherein the fastener is illustrated as being inserted into, and mounted within, a pair of overlapping thin gauge sheet metal members which may comprise for example, vertically oriented thin gauge sheet metal wall stud members and horizontally oriented, upper and lower thin gauge sheet metal track members, so as to form, for ex-ample, framework structures onto which wall boards are to be secured;

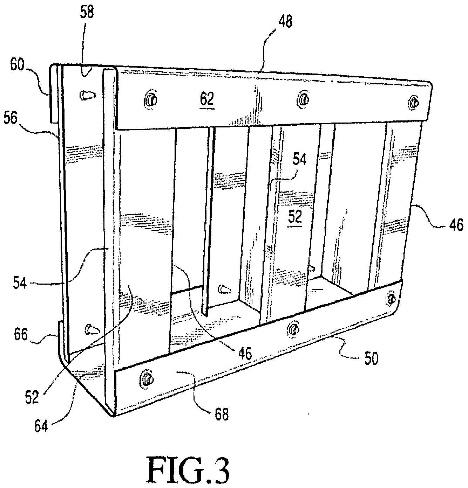

**FIGURE 3** is a perspective view of a framework or grid structure, for a wall system, comprising upper and lower, horizontally oriented thin gauge sheet metal track members, and a plurality of vertically oriented thin gauge sheet metal stud members which are fastened to the upper and lower horizontally oriented thin gauge sheet metal track members by means of the comparative example of the fastener, as disclosed within **FIGURES 1** and **2**, so as to interconnect the upper and lower horizontally oriented thin gauge sheet metal track members together;

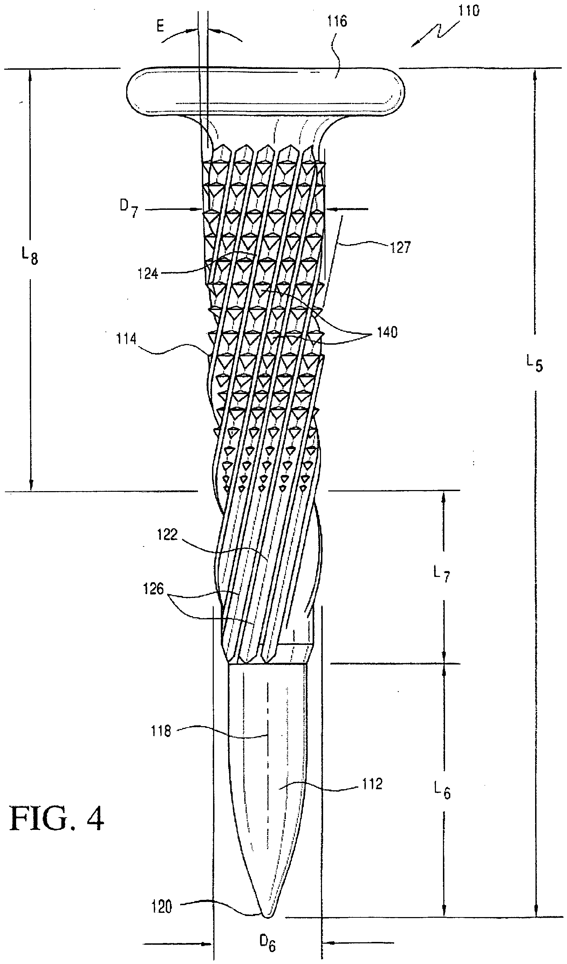

**FIGURE 4** is an enlarged side elevational view, similar to that of FIGURE 1, showing, however, an embodiment of a new and improved fastener, constructed in accordance with the principles and teachings of the present invention and illustrating the cooperative parts thereof, including spiral-threaded and nibbed shank portions, which is also uniquely adapted for insertion into thin gauge sheet metal members so as to secure thin gauge sheet metal members together, such as, for example, vertically oriented thin gauge sheet metal wall stud members and horizontally oriented, upper and lower thin gauge sheet metal track members, so as to form, for example, framework or grid structures onto which wall boards are to be secured;

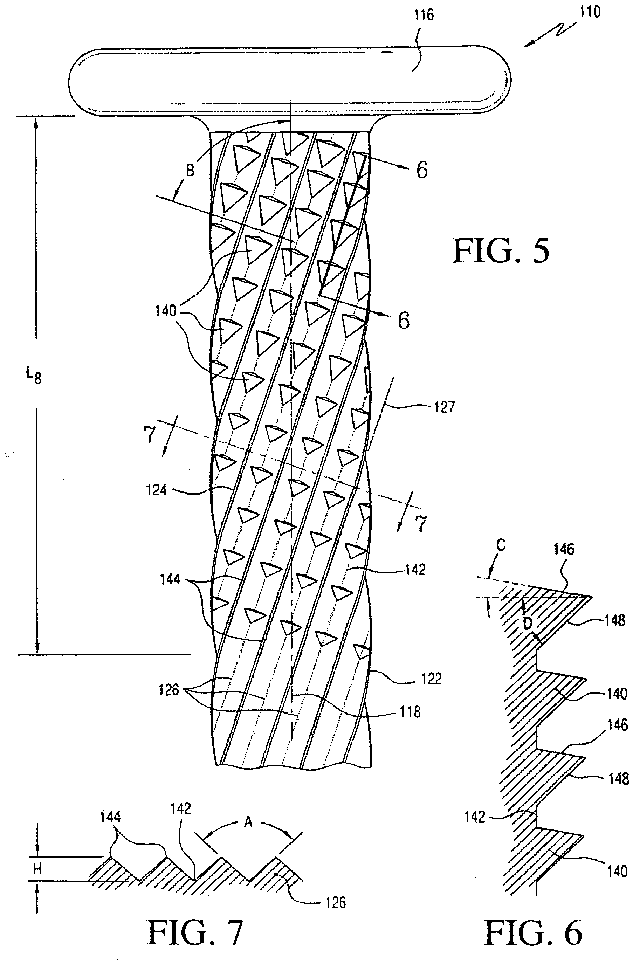

**FIGURE 5** is a partial, enlarged, side elevational view of the embodiment of the fastener of the present invention, as disclosed within **FIGURE 4**, illustrating the upper shank portion of the fastener upon which the plurality of nibs, as constructed in accordance with the principles and teachings of the present invention, are disclosed as being integrally formed and provided upon the upper spiral-threaded shank portion of the fastener so as to be interposed between the successive spiral threads;
**FIGURE 6** is a cross-sectional view of the embodiment of the fastener, as disclosed within **FIGURE 5** and as taken along lines **6-6** of **FIGURE 5**, wherein the details of the structure comprising the plurality of nibs, disposed upon the upper shank portion of the fastener, are disclosed; and
**FIGURE 7** is a cross-sectional view of the embodiment of the fastener, as disclosed within **FIGURE 5** and as taken along lines **7-7** of **FIGURE 5**, wherein the details of the structure comprising the plurality of spiral threads, comprising the spiral-threaded shank portion of the fastener, are disclosed.

### DETAILED DESCRIPTION OF THE PREFERRED EMBODIMENT

Referring now to the drawings, and more particularly to **FIGURES 1** and **2** thereof, the comparative example of a fastener, which does not form a part of the present invention, and showing the cooperative parts thereof, is disclosed and is gene-rally indicated by the reference character 10. More particularly, the comparative fastener 10 is seen to comprise a forwardly disposed pointed end portion 12, an intermediate shank portion 14, and a head portion 16, all formed or defined around a longitudinal axis 18. The forwardly disposed pointed end portion 12 is seen to have an ogive shape or configuration, which may either be that of a secant ogive or a tangent ogive, and in connection with the actual fabrication techniques for forming or manufacturing the ogive-shaped forwardly disposed pointed end portion 12 of the fastener 10, such techniques, as well as the actual steel chemical composition, the Rockwell hardness values, and the like, for forming or manufacturing the fastener 10 of the present invention may be similar to those as disclosed either within United States Patent 6,171,042 which issued to Olvera et al. on January 9, 2001, or within United States Patent 5,658,109 which issued to Van Allman et al. on August 19, 1997 . In particular, it is seen that the ogive-shaped forwardly disposed pointed end portion 12 of the fastener 10 is defined by means of a external surface portion which has a radius R₁ of approximately 1.25 inches (3.18 cm), and that the tip portion 20 of the ogive-shaped forwardly disposed pointed end portion 12 of the fastener 10 comprises a spherical configuration having a radius R₂ of approximately 0.010 inches (0.025 cm).

By providing the forwardly disposed pointed end portion 12 of the fastener 10 with the ogive shape or configuration, the fast and accurate penetration of the fastener into and through the thin gauge sheet metal components, without causing any excessive enlargement, distortion, tearing, or other destruction of the holes or apertures formed or defined therein, is facilitated. It is further noted that the fastener 10 can be used in connection with various thin gauge sheet metal structures which may vary in thickness dimensions between, for example, 20 gauge (0.091 cm) and 12 gauge (0.267 cm). Still further, the comparative fastener 10 may be utilized within different power-driven tools, such as, for example, pneumatically driven tools or gas-powered tools. In conjunction with the usage of the fastener within such different tools, it is noted that the head portion 16 may have a thickness dimension T which may be within the range of 0.035-0.050 inches (0.089-0.127 cm), however, in order to operatively cooperate with the different driver structure characteristic of such pneumatically driven and gas-powered tools, the diametrical extent D₁ of the head portion 16 is preferably within the range of 0,315-0.320 inches (0.800-0.813 cm) when the fastener 10 is to be used within a pneumatically driven tool, whereas when the fastener 10 is to be used within a gas-powered tool, the diametrical extent D₂ of the head portion 16 is preferably within the range of 0.215-0.250 inches (0.546-0.635 cm). Still yet further, it is noted that the overall length L₁ of the fastener 10, as extending from the upper or external surface of the head portion 16 to the tip portion 20, is within the range of 0.970-1.005 inches (2.464-2.553 cm), and that the length L₂ of the pointed end portion 12 of the fastener 10 is within the range of 0.285-0.325 inches (0.724-0.826 cm). Lastly, it is noted that the diametrical extent D₃ of the pointed end portion 12 of the fastener 10 is within the range of 0.097-0.102 inches (0.246-0.259 cm).

Continuing further, it is noted that the intermediate shank portion 14 of the fastener 10 comprises a forwardly disposed spiral-threaded shank portion 22 which is integrally connected at the forward end portion thereof to the pointed end portion 12 of the fastener 10, and a rearwardly disposed annularly fluted shank portion 24 which is interposed between the spiral-threaded shank portion 22 and the head portion 16 of the fastener 10. The forwardly disposed spiral-threaded shank portion 22 comprises a plurality of spiral threads 26 which are disposed at an angle of approximately 30° with respect to the longitudinal axis 18 of the fastener 10, and it is noted that the purpose of providing such spiral threads 26 upon the shank portion 22 of the fastener 10, which is disposed immediately upstream or rearwardly of the pointed end portion 12 of the fastener 10 so as to be interposed between the pointed end portion 12 of the fastener 10 and the annularly fluted shank portion 24 of the fastener 10, is to effectively extrude and thereby form mating thread forms within the annular walls or rim portions 28,30 of the thin gauge sheet metal components or structures 32,34 which effectively define or surround the apertures 36,38 previously formed within the thin gauge sheet metal components or structures 32,34 by means of the pointed end portion 12 of the fastener 10, all as can best be appreciated from **FIGURE 2****.**

As a result of the formation of the mating thread forms within the annular wall or rim portions 28,30 of the thin gauge sheet metal components or structures 32,34, it can be appreciated that in lieu of a truly circular locus defined within the aforenoted annular walls or rim portions 28,30 of the thin gauge sheet metal components or structures 32,34, the mating thread forms effectively comprise a plurality of circumferentially arranged peaks and valleys. In this manner, a larger total surface area is effectively defined upon the aforenoted annular walls or rim portions 28,30 of the thin gauge sheet metal components or structures 32,34 for a purpose to be disclosed shortly hereinafter. It is lastly noted that the spiral-threaded shank portion 22 has an external diametrical extent D₄ which is preferably within the range of 0.105-0.110 inches (0.267-0.279 cm), the axial or longitudinal length dimension L₃ of the spiral-threaded shank portion 22 is preferably within the range of 0.300-0.350 inches (0.762-0.889 cm), and still further, it is noted that the spiral-threaded shank portion 22 is tapered outwardly over its longitudinal or axial extent, as one proceeds in the direction extending from the pointed end portion 12 of the fastener 10 toward the annularly fluted shank portion 24, by means of 0.002 inches (0.005 cm). Such an upward or rearwardly oriented outward taper provided upon the spiral-threaded shank portion 22 of the fastener 10 results in the generation of a slight wedging effect or enhanced contact to be constantly or continuously developed between the spiral-threaded 22 of the fastener 10 and the annular walls or rim portions 28,30 of the thin gauge sheet metal components or structures 32,34 so as to effectively ensure the development or creation of the mating thread forms within the annular walls or rim portions 28,30 of the thin gauge sheet metal components or structures 32,34.

Lastly, in connection with the rearwardly disposed annularly fluted shank portion 24 of the fastener 10, it is seen that the annularly fluted shank portion 24 of the fastener 10 comprises a plurality of axially contiguous annular stepped flute members 40, and it is to be particularly appreciated that the structure of each one of the plurality of axially contiguous annular stepped flute members 40 comprises specific structure which uniquely adapts the comparative fastener 10 for its use in connection with the thin gauge sheet metal components or structures 32,34. It is initially noted that the rearwardly disposed annularly fluted shank portion 24 of the fastener 10 has an axial or longitudinal length dimension L₄ which is within the range of 0.300-0.330 inches (0.762-0.838 cm), and that the diametrical extent D₆ of such rearwardly disposed annularly fluted shank portion 24 of the fastener 10 is within the range of 0.110-0.115 inches (0.279-0.292 cm). Continuing further, and as can best be appreciated from **FIGURES 1** and **2**, it is additionally seen that each one of the plurality of axially contiguous annular stepped flute members 40 comprises a first annular face 42 which is sloped or inclined at a predetermined angle of, for example, 65° with respect to and toward the longitudinal axis 18 of the fastener 10 in the forward direction, and a second annular face 44 which is sloped or inclined at a predetermined angle of, for example, 15° with respect to and toward the longitudinal axis 18 of the fastener 10 in the rearward direction, wherein the forward end portion of each one of the forward, radially inwardly inclined annular faces 42 terminates at the rearward end portion of a respective one of the rearward, radially inwardly inclined annular faces 44 such that each one of the rearward, radially inwardly inclined annular faces 44 effectively defines an annular step or shoulder portion.

As may therefore be additionally appreciated from **FIGURE 2**, when the comparative fastener 10 is inserted through the pair of thin gauge sheet metal components or structures 32,34 so as to fixedly secure the pair of thin gauge sheet metal structures of components 32,34 together, the plurality of forward, radially inwardly inclined annular faces 42 of the rearwardly disposed annularly fluted shank portion 24 of the fastener 10 will effectively ratchet past the annular walls or rim portions 28, 30 of the thin gauge sheet metal components or structures 32, 34 whereupon the annular walls or rim portions 28,30 of the thin gauge sheet metal structures or components 32,34 will ultimately be seated upon particular ones of the rearward, radially inwardly inclined annular faces 44 of the rearwardly disposed annularly fluted shank portion 24 of the fastener 10 as is clearly illustrated within **FIGURE 2**. In this manner, such engaged interaction, defined between the annular walls or rim portions 28,30 of the thin gauge sheet metal components or structures 32,34, and the particular ones of the rearward, radially inwardly inclined annular faces 44 of the rearwardly disposed annularly fluted shank portion 24 of the fastener 10, serves to effectively secure and lock the fastener 10 within the thin gauge sheet metal structures or components 32,34 such that the fastener 10 exhibits a significantly high pull-out resistance value with respect to the thin gauge sheet metal structures or components 32,34.

In addition, as has been noted hereinbefore, the initial insertion of the fastener 10 into the pair of thin gauge sheet metal structures or components 32,34 results in a repetitive ratcheting of the plurality of forward, radially inwardly inclined annular faces 42 of the rearwardly disposed annularly fluted shank portion 24 of the fastener 10 past the annular walls or rim portions 28,30 of the thin gauge sheet metal components or structures 32,34. Such ratcheting action will, in turn, cause the annular walls or rim portions 28,30 of the thin gauge sheet metal components or structures 32,34 to repetitively flex in the axial forward direction and then resiliently return to their normal, non-deflected positions. In this manner, not only are the annular walls or rim portions 28,30 of the thin gauge sheet metal structures or components 32,34 seated upon the particular ones of the annular shoulder or stepped portions 44 of the rearwardly disposed annularly fluted shank portion 24 of the fastener 10, but in addition, the resilient return of the annular walls or rim portions 28,30 of the thin gauge sheet metal structures or components 32,34 to their non-deflected positions also causes the annular walls or rim portions 28,30 of the thin gauge sheet metal structures or components 32,34 to effectively engage the forward end portions of two of the forward, radially inwardly inclined annular faces 42 of the fastener 10 so as to effectively cause the fastener 10 to move axially rearwardly ever so slightly whereby a relatively tight clamped engagement is developed between the particular ones of the annular shoulder or stepped portions 44 of the rearwardly disposed annularly fluted shank portion 24 of the fastener 10 and the annular walls or rim portions 28,30 of the thin gauge sheet metal structures or components 32,34. In this manner, the pull-out resistance value of the fastener 10, with respect to the annular walls or rim portions 28,30 of the thin gauge sheet metal components or structures 32,34, is additionally enhanced.

Still yet further, it is to be additionally appreciated that as a result of both of the annular walls or rim portions 28,30 of the thin gauge sheet metal components or structures 32,34 effectively engaging, for example, two of the annular shoulder or stepped portions 44 of the rearwardly disposed annularly fluted shank portion 24 of the fastener 10, the aforenoted clamping forces, locking forces, and pull-out resistance forces are significantly enhanced, particularly in connection with the thinner gauge sheet metals where relatively small amounts of surface-to-surface contact are normally defined between the annular walls or rim portions 28,30 of the thin gauge sheet metal components or structures 32,34 and the shank portion per se of a typical fastener. In other words, in addition to the normal or conventional slid-ing coefficient of friction, as defined between the annular walls or rim portions 28,30 of the thin gauge sheet metal components or structures 32,34 and the shank portion per se of the fastener, determining or playing the major role in the pull-out resistance values or characteristics of the comparative fastener, the pull-out resistance values or characteristics are additionally defined, and significantly enhanced in connection with particular thin gauge sheet metal components, by means of the actual axially aligned abutment contact defined between the walls or rim portions 28,30 of the thin gauge sheet metal components or structures 32,34 and the annular shoulder or stepped portions 44 of the rearwardly disposed annularly fluted shank portion 24 of the fastener 10.

It is additionally noted that in connection with the interaction or inter-engagement defined between the annular walls or rim portions 28,30 of the thin gauge sheet metal structures or components 32,34 and the annular shoulder or stepped portions 44 of the rearwardly disposed annularly fluted shank portion 24 of the fastener 10, the number of axially contiguous annular stepped flute members 40 provided upon the rearwardly disposed annularly fluted shank portion 24 of the fastener 10 may comprise, for example, thirty-four threads per inch (13.4 threads per cm) whereby each one of the axially contiguous annular stepped flute members 40 will have a pre-determined axial length, however, the number of such axially contiguous annular stepped flute members 40, and the corresponding axial length of each one of the axially contiguous annular stepped flute members 40, may be varied or adapted to properly interengage the annular walls or rim portions 28,30 of the thin gauge sheet metal structures or components 32,34 as a function of the particular thickness gauge of the thin gauge sheet metal components or structures 32,34 being employed. It is lastly to be remembered that as a result of the initial insertion of the fastener 10 into and through the thin gauge sheet metal components or structures 32,34, the spiral thread portion 22 of the fastener 10 caused corresponding thread forms to be formed within the annular walls or rim portions 28,30 of the thin gauge sheet metal components or structures 32,34 whereby such inner annular walls or rim portions 28,30 of the thin gauge sheet metal components or structures 32,34 would effectively exhibit increased surface area values. Accordingly, it is to be further appreciated that such increased surface area values also serve to optimally engage the annular shoulder or stepped portions 44 of the fastener 10 so as to further increase or enhance the pull-out resistance value of the fastener 10.

With reference being additionally and briefly made to **FIGURE 3**, it is to be additionally appreciated that the comparative fastener 10 is particularly useful in connection with the attachment or securing together of different types of thin gauge sheet metal components or structures, such as, for example, the attachment of vertically oriented stud members 46 to upper and lower, horizontally oriented track members 48,50 in connection with the erection or installation of, for example, interior or exterior wall framework grids or structures. Each one of the vertically oriented stud members 46, as well as each one of the horizontally oriented track members 48,50, is fabricated from thin gauge sheet metal and has a substantially U-shaped cross-sectional configuration. For example, it is clearly seen that each one of the vertically oriented stud members 46 comprises a base or web member 52, and a pair of side members 54,56 extending substantially perpendicular thereto. In a similar manner, the upper track member 48 comprises a base or web member 58, and a pair of dependent side members 60,62 extending substantially perpendicular thereto, while the lower track member 50 comprises a base or web member 64, and a pair of upstanding side members 66,68 extending substantially perpendicular thereto.

The vertically oriented stud members 46 are adapted to be disposed internally within the upper and lower track members 48,50 such that the oppositely disposed vertical end portions of the stud members 46 are seated upon the inner faces of the base or web members 58,64 of the upper and lower track members 48,50, while the external surface portions of the base or web members 52 of the stud members 46 are disposed in contact with the interior surfaces of the dependent side members 60,62 of the upper track member 48, as well as being disposed in contact with the interior surfaces of the upstanding side members 66,68 of the lower track member 50. The comparative fasteners 10 can then be utilized to securely fasten or connect the vertically oriented stud members 46 to the upper and lower track members 48,50 as a result of the passage of the fasteners 10 through the up-standing side members 66,68 of the lower track member 50 and the lower end portions of the base or web members 52 of the stud members 46, as well as the passage of the fasteners 10 through the dependent side members 60,62 of the upper track member 48 and the upper end portions of the base or web members 52 of the stud members 46.

With reference now being made to FIGURE 4, an embodiment of a new and improved fastener, constructed in accordance with the principles and teachings of the present invention, and showing the cooperative parts thereof, is disclosed and is generally indicated by the reference character 110. The embodiment fastener 110 as is disclosed with-in FIGURE 4 is somewhat similar to the comparative fastener 10 as is disclosed within FIGURE 1, and therefore only the structural differences that comprise the embodiment fastener 110, as compared to the comparative fastener 10, will be discussed. It is also noted that the structural features or components comprising the embodiment fastener 110, which correspond to the structural features or components comprising the comparative fastener 10, will be designated by similar reference characters except that the reference characters designating the structural features or components comprising the embodiment fastener 110 will be within the 100 series. More particularly, it can therefore be appreciated that the new and improved embodiment fastener 110 is seen to comprise a forwardly disposed pointed end portion 112, an intermediate shank portion 114, and a head portion 116, all formed or defined around a longitudinal axis 118. It is noted that the overall length L₅ of the embodiment fastener 110, as extending from the upper or external surface of the head portion 116 to the tip portion 120, may be slightly different than that of the comparative fastener 10 and may accordingly be within the range of 0.935-0.955 inches (2.375-2.426 cm), however the length L₆ of the pointed end portion 112 of the fastener 110 is within the same range of 0.285-0.325 inches (0.724-0.826 cm) and preferably has a length dimension L₆ of 0.300 inches (0.762 cm).

Continuing further, it is noted that the intermediate shank portion 114 of the fastener 110 comprises a forwardly disposed spiral-threaded shank portion 122 which is integrally connected at the forward end portion thereof to the pointed end portion 112 of the fastener 110, and a rearwardly disposed combination spiral-threaded and nibbed shank portion 124 which is interposed between the forwardly-disposed spiral-threaded shank portion 122 and the head portion 116 of the fastener 110. The forwardly disposed spiral-threaded shank portion 122 comprises a plurality of spiral threads 126 which are disposed at a predetermined angle, which may be within the range of 15-20° with respect to the longitudinal axis 118 of the fastener 110, with the predetermined angle preferably being 18° with respect to the longitudinal axis 118 of the fastener 110, and it is seen that each one of the spiral threads 126 is effectively oriented along an axis 127. It is noted that the purpose of providing the spiral threads 126 upon the forwardly disposed spiral-threaded shank portion 122 of the fastener 110, which is disposed immediately upstream or rearwardly of the pointed end portion 112 of the fastener 110 so as to be interposed between the pointed end portion 112 of the fastener 110 and the rearwardly disposed combination spiral-threaded and nibbed shank portion 124 of the fastener 110, is the same as providing the spiral threads 26 up-on the forwardly disposed shank portion 22 of the comparative fastener 10, that is, to effectively extrude and thereby form mating thread forms within the annular walls or rim portions 28,30 of the thin gauge sheet metal components or structures 32,34 which effectively define or surround the apertures 36,38 previously formed within the thin gauge sheet metal components or structures 32,34 by means of the pointed end portion 112 of the fastener 110, as is illustrated, and was previously discussed in connection with, **FIGURE 2**. It is also noted that the spiral threads 126 provided upon the forwardly disposed spiral-threaded shank portion 122 of the fastener 110 are preferably provided with a pitch of thirty-four threads per inch (13.4 threads per cm), that the forwardly disposed spiral-threaded shank portion 122 has an external diametrical extent D₆ which is preferably within the range of 0.112-0.117 inches (0.284-0.297 cm), and that the axial or longitudinal length dimension L₇ of the forwardly disposed spiral-threaded shank portion 122 is preferably within the range of 0.230-0.265 inches (0.584-0.673 cm).

Lastly, in connection with the rearwardly disposed combination spiral-threaded and nibbed shank portion 124 of the embodiment fastener 110, it is initially noted that the rearwardly disposed combination spiral-threaded and nibbed shank portion 124 has an axial length dimension L₈ of 0.400 inches (1.016 cm), and that the diametrical extent D₇ of the rearwardly disposed combination spiral-threaded and nib-bed shank portion 124 may be the same as, or slightly greater than, the diametrical extent D₆ of the forwardly disposed spiral-threaded shank portion 122, as will be discussed more fully hereinafter. More importantly, however, it is seen that the embodiment fastener 110, as disclosed within **FIGURE 4**, is structurally different from the comparative fastener 10, as disclosed within **FIGURE 1**, in that the plurality of axially contiguous annular stepped flute members 40, characteristic of the annularly fluted shank portion 24 of the comparative fastener 10, have, in effect, been eliminated, and in lieu thereof, the rearwardly disposed combination spiral-threaded and nibbed shank portion 124 of the embodiment fastener 110 has a plurality of nibs 140 integrally formed thereon. As may best be appreciated as a result of additional reference being made to **FIGURES 5-7**, it is seen that the spiral threads 126 extend continuously from the forwardly disposed spiral-threaded shank portion 122, onto the rearwardly disposed combination spiral-threaded and nibbed shank portion 124, and terminate adjacent to the fastener head portion 116.

In addition, it is seen that the plurality of spiral threads 126 comprise a plurality of successive or adjacent root portions 142, and a plurality of successive or adjacent crest portions 144 interposed between the root portions 142. The angle of inclusion A defined between adjacent crest wall portions of adjacent spiral threads 126 is prefer-ably 90, and the height H of the crest portions 144, as measured from the root portions 142, is within the range of 0.012-0.015 inches (0.030-0.038 cm). The nibs 140 are disposed within the root portions 142 of the spiral threads 126, and it is further appreciated that the nibs 140 are disposed within a spiral or coiled array around the external periphery of the combination spiral-threaded and nibbed shank portion 124 of the embodiment fastener 110. In particular, it is noted that each spiraled or coiled segment of the overall spiral or coiled array of the nibs 140 is disposed at a pre-determined angle B, such as, for example, between 70°-75°, and preferably 72°, with respect to the longitudinal axis 118 of the fastener 110 such that each spiraled or coiled segment of the overall spiral or coiled array of the nibs 140 is disposed at an angle which is effectively complementary or perpendicular to the axes of the spiral threads 126, as exemplified at 127, within **FIGURES 4** and **5**. In this manner, as will be-come more apparent hereinafter, the aforenoted angular disposition of the nibs 140 will enhance the withdrawal or pull-out resistance of the fastener 110 as the same might tend to pull out or withdraw from its disposition with respect to the thin gauge sheet metal components or structures 32,34.

Continuing further, it is to be particularly appreciated that the structure of each one of the plurality of nibs 140 comprises specific structure which uniquely adapts the embodiment fastener 110 of the present invention for its use in connection with the thin gauge sheet metal components or structures 32,34. As can best be appreciated from **FIGURE 6**, it is seen that each one of the plurality of nibs 140 has a substantially triangular configuration which comprises a first upper base surface 146 which is sloped or inclined forwardly at a predetermined angle C with respect to and toward a horizontally oriented radius disposed perpendicular to the longitudinal axis 118 of the fastener 110, and a second lower surface or face 148 which is sloped or inclined forwardly at a predetermined angle D with respect to and to-ward the longitudinal axis 118 of the fastener 110 so as to facilitate insertion of the fastener 110 past the annular walls or rim portions 28,30 of the thin gauge sheet metal components or structures 32,34. The forward end or crest portion of each one of the upper surfaces or faces 146 terminates at the rearward crest end portion of a respective one of the lower surfaces or faces 148, and the forward end or root portion of each one of the lower surfaces or faces 148 terminates at the root portion 142 of the spiral threads 126. In this manner, the plurality of nibs 140, particularly the up-per surfaces or faces 146, effectively define a plurality of steps or shoulder portions. It is noted still further that the particular angle C defining the slope or inclination of each upper surface or face 146 of each nib 140 can vary between 0°-10°, with the angle preferably being 6°, while the particular angle D defining the slope or inclination of each lower surface or face 148 is preferably 45°.

Still further, the pitch defined successive ones of the nibs 140, as taken along any of the axes 127, is prefer-ably 0.030 inches (0.076 cm), however, the number of such nibs 140, and the corresponding pitch defined between successive nibs 140. may of course be varied or adapted so as to, for example, properly interengage the annular walls or rim portions 28,30 of the thin gauge sheet metal structures or components 32,34 as a function of the particular thickness gauge of the thin gauge sheet metal components or structures 32,34 being employed, as will be more fully appreciated hereinafter. It is lastly noted that the array of nibs 140 is preferably tapered, as indicated by the arrow E in **FIGURE 4**, as one proceeds along the length of the combination spiral-threaded and nibbed shank portion 124 from the head end 116 of the fastener 110 to the pointed tip end 120 of the fastener 110, on the order of 2°-3° such that the crest height of each one of the nibs 140 may vary from a value of, for example, 0.015 inches (0.038 cm) to 0.005 inches (0.013 cm). In conjunction with such tapered nibs 140, it was previously noted that the outside diameter D₇ of the array of nibs 140, disposed upon the combination spiral-threaded and nibbed shank portion 124 of the fastener 110, may either be equal to or greater than the outside diameter D₆ of the spiral-threaded shank portion 122.

Accordingly, if the outside diameter D₇ of the array of nibs 140, disposed upon the combination spiral-threaded and nibbed shank portion 124 of the fastener 110, is greater than the outside diameter D₆ of the spiral-threaded shank portion 122, by means of a predetermined amount, such as, for example, 0.009-0.018 inches (0.023-0.046 cm), then the outside diameter D₇ of the array of nibs 140, disposed upon the combination spiral-threaded and nibbed shank portion 124 of the fastener 110, may have a value within the range of 0.121-0.135 inches (0.307-0.343 cm). In either case, whether the out-side diameter D₇ of the array of nibs 140, disposed upon the combination spiral-threaded and nibbed shank portion 124 of the fastener 110, is equal to or greater than the outside diameter D₆ of the spiral-threaded shank portion 122, the depth or height of the nibs 140, as compared to the depth or height of the spiral threads 126, and in view of the afore-noted taper of the array of nibs 140 will permit the nibs 140, disposed at the end of the combination spiral-threaded and nibbed shank portion 124 disposed adjacent to the spiral-threaded shank portion 122 to be assimilated into the spiral threads 126. As was the case with the comparative fastener 10, such tapered structure results in the generation of a slight wedging effect or enhanced contact to be constantly or continuously developed between the combination spiral-threaded and nibbed shank portion 124 of the fastener 110 and the annular walls or rim portions 28,30 of the thin gauge sheet metal components or structures

32, 34 so as to effectively ensure the development or creation of the mating thread forms within the annular walls or rim portions 28,30 of the thin gauge sheet metal components or structures 32,34.

As may therefore be appreciated with reference again being made to **FIGURE 2**, when the new and improved fastener 110, constructed in accordance with the principles and teachings of the present invention, is inserted through the pair of thin gauge sheet metal components or structures 32,34 so as to fixedly secure the pair of thin gauge sheet metal structures of components 32,34 together, the plurality of lower, radially inwardly inclined faces 148 of the nibs 140 will effectively ratchet past the annular walls or rim portions 28,30 of the thin gauge sheet metal components or structures 32,34 whereupon the annular walls or rim portions 28,30 of the thin gauge sheet metal structures or components 32,34 will ultimately be seated upon particular ones of the upper, radially inwardly inclined faces 146 of the nibs 140. In this manner, such engaged interaction, defined between the annular walls or rim portions 28,30 of the thin gauge sheet metal components or structures 32,34, and the particular ones of the upper, radially inwardly inclined faces 146 of the nibs 140, serves to effectively secure and lock the fastener 110 within the thin gauge sheet metal structures or components 32,34 such that the fastener 10 exhibits a significantly high pull-out resistance value with respect to the thin gauge sheet metal structures or components 32,34.

In addition, as has been noted hereinbefore, the initial insertion of the fastener 110 into the pair of thin gauge sheet metal structures or components 32,34 results in a repetitive ratcheting of the plurality of lower, radially inwardly inclined faces 148 of the nibs 140 past the annular walls or rim portions 28,30 of the thin gauge sheet metal components or structures 32,34. Such ratcheting action will, in turn, cause the annular walls or rim portions 28,30 of the thin gauge sheet metal components or structures 32,34 to repetitively flex in the axial forward direction and then resiliently return to their normal, non-deflected positions. In this manner, not only are the annular walls or rim portions 28,30 of the thin gauge sheet metal structures or components 32,34 seated upon the particular ones of the shoulder or stepped portions 146 of the nibs 140, but in addition, the resilient return of the annular walls or rim portions 28,30 of the thin gauge sheet metal structures or components 32,34 to their non-deflected positions also causes the annular walls or rim portions 28,30 of the thin gauge sheet metal structures or components 32,34 to effectively engage the lower forward end portions 148 of two of the nibs 140 so as to effectively cause the fastener 110 to move axially rearwardly ever so slightly whereby a relatively tight clamped engagement is developed between the particular ones of the upper portions 146 of the nibs 140 and the annular walls or rim portions 28,30 of the thin gauge sheet metal structures or components 32,34. In this manner, the pull-out resistance value of the fastener 110, with respect to the annular walls or rim portions 28,30 of the thin gauge sheet metal components or structures 32,34, is additionally enhanced.

Still yet further, it is to be additionally appreciated that as a result of both of the annular walls or rim portions 28,30 of the thin gauge sheet metal components or structures 32,34 effectively engaging, for example, two of the upper portions 146 of the nibs 140, the aforenoted clamping forces, locking forces, and pull-out resistance forces are significantly enhanced, particularly in connection with the thinner gauge sheet metals where relatively small amounts of surface-to-surface contact are normally defined between the annular walls or rim portions 28,30 of the thin gauge sheet metal components or structures 32,34 and the shank portion per se of a typical fastener. In other words, or considered from a different viewpoint, in addition to the normal or conventional sliding coefficient of friction, as defined between the annular walls or rim portions 28,30 of the thin gauge sheet metal components or structures 32,34 and the shank portion per se of the fastener, determining or playing the major role in the pull-out resistance values or characteristics of the fastener, in accordance with the teachings and principles of the present invention, the pull-out resistance values or characteristics are additionally defined, and significantly enhanced in connection with particular thin gauge sheet metal components, by means of the actual axially aligned abutment contact defined between the walls or rim portions 28,30 of the thin gauge sheet metal components or structures 32,34 and the upper surface portions 146 of the nibs 140.

Thus, it may be seen that in accordance with the teachings and principles of the present invention, there has been provided a new and improved fastener which comprises a forwardly extending pointed tip portion and a shank portion. The forwardly extending point tip portion has a configuration so as to facilitate the fast and accurate penetration of the fastener into and through the thin gauge sheet metal components without causing any excessive enlargement of the holes or apertures formed or defined therein, and the shank portion comprises a lower, spiral-threaded shank portion which continues to facilitate the ease of penetration of the fastener into and through the thin gauge sheet metal components, as initiated by means of the pointed tip portion, and at the same time causes a mating thread to effectively be extruded within the thin gauge sheet metal components so as to effectively develop or generate enhanced surface areas or regions for ultimate contact with an upper shank portion of the fastener when the fastener is fully driven and seated within the thin gauge sheet metal components.

In addition, the upper shank portion comprises a plurality of nibs, having oppositely disposed or oriented faces for facilitating the penetration of the fastener into and through the apertured

thin gauge sheet metal members, and for engaging the annular rim regions of the thin gauge sheet metal members, which surround the apertures formed therewithin, so as to significantly enhance the clamping forces and pull-out resistance values of the fastener with respect to the thin gauge sheet metal members. The fasteners are uniquely adapted for securing together vertically oriented stud members and horizontally oriented track members of wall grids or framework structures.

Obviously, many variations and modifications of the present invention are possible in light of the above teachings. While the disclosure has been directed toward the fastening together of a pair of thin gauge sheet metal members, it is envisioned that the fastener of the present invention can be utilized to fasten together more than two thin gauge sheet metal members. It is therefore to be understood that within the scope of the appended claims, the present invention may be practiced otherwise than as specifically described herein.

## Claims

1. A fastener (110) for fastening together a pair of thin gauge sheet metal members (32,34), comprising:
a pointed end portion (112) for forming apertures (36,38) within the thin gauge sheet metal members as said fastener is inserted through the thin gauge sheet metal members;
a head portion (116); and
a shank portion (114) interposed between said pointed end portion and said head portion and defined around a longitudinal axis (118);
wherein said shank portion comprises a spiral-threaded shank portion (122) extending from a first axial position, disposed immediately upstream of said pointed end portion, to a second axial position substantially adjacent to said head portion, and comprising a plurality of circumferentially spaced spiral threads (126) disposed upon said spiral-threaded shank portion such that each one of said plurality of circumferentially spaced spiral threads extends substantially from said first axial position to said second axial position, and at a predetermined angle with respect to said longitudinal axis of said shank portion, for forming corresponding threads upon annular wall portions (28,30) of the thin gauge sheet metal members, which surround the apertures defined within the thin gauge sheet metal members, as a result of the insertion of said pointed end portion of said fastener through the thin gauge sheet metal members, and a plurality of substantially linear arrays of nibs (140) formed upon said plurality of circumferentially spaced spiral threads disposed upon said spiral-threaded shank portion, for engaging the annular wall portions of the thin gauge sheet metal members which surround the apertures defined within the thin gauge sheet metal members so as to effectively lock said fastener within the thin gauge sheet metal members and enhance the pull-out resistance of said fastener with respect to the thin gauge sheet metal members so as to securely fasten the thin gauge sheet metal members together,
**characterised in that** the plurality of substantially linear arrays of nibs are formed only upon axially rearward regions of said plurality of circumferentially spaced spiral threads, disposed upon said spiral-threaded shank portion (124), which extend from a third axial portion intermediate said first and second axial positions, to said second axial position substantially adjacent to said head portion.

2. The fastener (110) as set forth in claim 1, wherein:
said pointed end portion of said fastener has an ogive configuration.

3. The fastener (110) as set forth in claim 2, wherein:
said ogive configuration is selected from the group comprising a tangent ogive and a secant ogive.

4. The fastener (110) as set forth in any preceding claim, wherein:
said plurality of spiral threads (126), comprising said spiral-threaded shank portion (122), are disposed at a predetermined angle, with respect to said longitudinal axis (118) of said shank portion, which is within the range of 15-20°.

5. The fastener (110) as set forth in any preceding claim, wherein:
said plurality of arrays of nibs (140) are disposed within root portions (142) of said spiral-threaded shank portion (124) of said fastener so as to be interposed between crest portions (144) of said spiral-threaded shank portion of said fastener.

6. The fastener (110) as set forth in claim 4, wherein:
each one of said arrays of nibs (140) comprises a spiral array wherein each spiral portion of said spiral array of nibs is disposed at a predetermined angle (B), with respect to said longitudinal axis (118) of said shank portions, which is within the range of 70-75° so as to be substantially perpendicular to said plurality of spiral threads (126).

7. The fastener (110) as set forth in claim 6, wherein:
each one of said nibs (140) has a substantially triangular configuration comprising an axially forward, radially inwardly inclined lower surface (148) for facilitating the axial insertion of said spiral shank portion (122) of said fastener past the annular wall portions (28,30) of the thin gauge sheet metal members (32,34), and an axially rearward, radially inwardly inclined upper base surface (146) for defining a stepped, shoulder portion upon which one of the annular wall portions of the thin gauge sheet metal members is adapted to be seated so as to lockingly secure said fastener within the thin gauge sheet metal members and readily prevent pull-out of said fastener with respect to the thin gauge sheet metal members and thereby securely fasten the thin gauge sheet metal members together.

8. The fastener (110) as set forth in claim 7, wherein:
each one of said axially forward, radially inwardly inclined lower surfaces (148) of said nibs (140) is disposed in a forwardly disposed radially inwardly inclined manner at a predetermined angle (D) with respect to said longitudinal axis (118) of said shank portion of said fastener which is approximately 45°; and
each one of said axially rearward radially inwardly inclined upper base surfaces (146) of said nibs is disposed in a rearwardly disposed radially inwardly inclined manner at a predetermined angle (C) with respect to said longitudinal axis of said shank portion of said fastener which is within the range of 0-10°.

9. The fastener (110) as set forth in claim 7 or 8, wherein:
a pair of said axially rearward, upper base surfaces (146) together define a pair of said stepped, shoulder portions upon which both of the annular wall portions (28,30) of the thin gauge sheet metal members (32,34) are adapted to be seated so as to effectively double the pull-out resistance forces which lockingly secure said fastener within the thin gauge sheet metal members and readily prevent the withdrawal of said fastener with respect to the thin gauge sheet metal members so as to there-by securely fasten the thin gauge sheet metal members together.

10. In combination, a pair of thin gauge sheet metal members (32,34), and a fastener (110) in accordance with any preceding claim.

11. The combination as set forth in claim 10, wherein:
said pair of thin gauge sheet metal members (32,34) comprise track (48,50) and stud (46) members for erecting a wall framework.

12. The combination as set forth in claim 11, wherein:
each one of said track (48,50) and stud (46) members has a substantially U-shaped cross-sectional configuration comprising a base web member (54,58,64) and a pair of side members (52,56,60,62,66,68).

13. The combination as set forth in claim 12, wherein:
in mounted state base web members (54) of said stud members (46) are fastened to said side members (60,62,66,68) of said track members (48,50) comprising said wall framework.

## Patentansprüche

1. Befestigungseinrichtung (110) zum Verbinden eines Paars von Feinblech-Elementen (32, 34), die Folgendes umfasst:
einen spitz zulaufenden Endabschnitt (112), um Öffnungen (36, 38) in den Feinblech-Elementen zu schaffen, wenn die Befestigungseinrichtung durch die Feinblech-Elemente eingeführt wird;
einen Kopfabschnitt (116); und
einen Schaftabschnitt (114), der zwischen dem spitz zulaufenden Endabschnitt und dem Kopfabschnitt eingefügt ist und um eine longitudinale Achse definiert (118) ist;
wobei der Schaftabschnitt einen Schaftabschnitt mit einem Schraubenliniengewinde (122) aufweist, der sich von einer ersten axialen Position, die unmittelbar oberhalb des spitz zulaufenden Endabschnitts angeordnet ist, zu einer zweiten axialen Position, die im Wesentlichen an den Kopfabschnitt angrenzt, erstreckt, und der mehrere in Abständen in Umlaufrichtung angeordnete Schraubenliniengewindegänge (126), die so auf dem Schaftabschitt mit einem Schraubenliniengewinde angeordnet sind, dass jeder der mehreren in Abständen in Umlaufrichtung angeordnete Schraubenliniengewindegänge sich im Wesentlichen von der ersten axialen Position zu der zweiten axialen Position und unter einem vorgegebenen Winkel in Bezug auf die longitudinale Achse des Schaftabschnitts erstreckt, um die entsprechenden Gewindegänge auf den ringförmigen Wandabschnitten (28, 30) der Feinblech-Elemente zu bilden, die die Öffnungen umgeben, die in den Feinblech-Elementen definiert sind als Ergebnis des Einführens des spitz zulaufenden Endabschnitts der Befestigungseinrichtung durch die Feinblech-Elemente, und mehrere im Wesentlichen lineare Gruppen von Spitzen (140), die auf den mehreren in Abständen in Umlaufrichtung angeordneten Schraubenliniengewindegängen gebildet sind, die auf dem Schaftabschnitt mit Schraubenliniengewinde angeordnet sind, umfasst, um mit den ringförmigen Wandabschnitten der Feinblech-Elemente, die die Öffnungen umgeben, die in den Feinblech-Elementen definiert sind, in eingriff zu gelangen, um die Befestigungseinrichtung in den Feinblech-Elementen wirksam zu verriegeln und den Widerstand der Befestigungseinrichtung gegen Herausziehen in Bezug auf die Feinblech-Elemente zu erhöhen, um so die Feinblech-Elemente sicher miteinander aneinander zu befestigen,
**dadurch gekennzeichnet, dass** die mehreren im Wesentlichen linearen Gruppen von Spitzen nur auf axial rückwärtigen Bereichen der mehreren in Abständen in Umlaufrichtung angeordneten Schraubenliniengewindegängen gebildet sind, die auf dem Schaftabschnitt (124) mit Schraubenliniengewinde angeordnet sind, der sich von einer dritten axialen Position zwischen der ersten und der zweiten axialen Position bis zu der zweiten axialen Position, die im Wesentlichen an den Kopfabschnitt angrenzt, ausdehnt.

2. Befestigungseinrichtung (110) nach Anspruch 1, wobei:
der spitz zulaufende Endabschnitt der Befestigungseinrichtung eine ogive Konfiguration aufweist.

3. Befestigungseinrichtung (110) nach Anspruch 2, wobei:
die ogive Konfiguration aus der Gruppe gewählt ist, die eine Tangenten-Ogive und eine Sekanten-Ogive umfasst.

4. Befestigungseinrichtung (110) nach einem der vorhergehenden Ansprüche, wobei:
die mehreren Schraubenliniengewindegänge (126), die den Schaftabschitt mit Schraubenliniengewinde (122) umfassen, unter einem vorgegeben Winkel in Bezug auf die longitudinale Achse (118) des Schaftabschnitts angeordnet sind, der im Bereich von 15-20° liegt.

5. Befestigungseinrichtung (110) nach einem der vorhergehenden Ansprüche, wobei:
die mehreren Gruppen von Spitzen (140) in Sohlenabschnitten (142) des Schaftabschnitts mit Schraubenliniengewinde (124) der Befestigungseinrichtung angeordnet sind, so dass sie zwischen den Scheitelabschnitten (144) des Schaftabschnitts mit Schraubenliniengewinde der Befestigungseinrichtung eingefügt sind.

6. Befestigungseinrichtung (110) nach Anspruch 4, wobei:
jede der Gruppen von Spitzen (140) eine gewundene Gruppe umfasst, wobei jeder gewundene Abschnitt der gewundenen Gruppe von Spitzen unter einem vorgegebenen Winkel (B) in Bezug auf die longitudinale Achse (118) der Schaftabschnitte angeordnet ist, der im Bereich von 70-75° liegt, so dass er im Wesentlichen senkrecht zu den mehreren Schraubenliniengewindegängen (126) steht.

7. Befestigungseinrichtung (110) nach Anspruch 6, wobei:
jede der Spitzen (140) eine im wesentlichen dreieckige Konfiguration aufweist, die eine axial vordere, radial nach innen geneigte untere Oberfläche (148) aufweist, um das axiale Einführen des Schaftabschnitts mit einem Schraubenliniengewinde (122) der Befestigungseinrichtung vorbei an den ringförmigen Wandabschnitten (28, 30) der Feinblech-Elemente (32, 34) zu erleichtern, und eine axial hintere, radial nach innen geneigte obere Grundfläche (146) aufweist, um einen stufenförmigen Absatzabschnitt zu definieren, auf dem einer der ringförmigen Wandabschnitte der Feinblech-Elemente aufsitzen kann, um die Befestigungseinrichtung in den Feinblech-Elementen verriegelnd zu befestigen und jederzeit das Herausziehen der Befestigungseinrichtung in Bezug auf die Feinblech-Elemente zu verhindern und dadurch die Feinblech-Elemente sicher aneinander zu befestigen.

8. Befestigungseinrichtung (110) nach Anspruch 7, wobei:
jede der axial vorderen, radial nach innen geneigten unteren Oberflächen (148) der Spitzen (140) in einer vorne angeordneten, radial nach innen geneigten Weise unter einem vorgegebenen Winkel (D) in Bezug auf die longitudinale Achse (118) des Schaftabschnitts der Befestigungseinrichtung angeordnet ist, der etwa 45° beträgt; und
jede der axial hinteren, radial nach innen geneigten oberen Grundflächen (146) der Spitzen in einer hinten angeordneten, radial nach innen geneigten Weise unter einem vorgegebenen Winkel (C) in Bezug auf die longitudinale Achse des Schaftabschnitts der Befestigungseinrichtung angeordnet ist, der im Bereich von 0-10° liegt.

9. Befestigungseinrichtung (110) nach Anspruch 7 oder 8, wobei:
ein Paar der axial hinteren, oberen Grundflächen (146) gemeinsam ein Paar der stufenförmigen Absatzabschnitte definieren, auf denen beide ringförmigen Wandabschnitte (28, 30) der Feinblech-Elemente (32, 34) aufsitzen können, um effektiv die Widerstandskräfte gegen das Herausziehen zu verdoppeln, die die Befestigungseinrichtung verriegelnd in den Feinblech-Elementen befestigen und jederzeit das Herausziehen der Befestigungseinrichtung in Bezug auf die Feinblech-Elemente verhindern, so dass sie dadurch die Feinblech-Elemente sicher aneinander befestigen.

10. Kombination aus einem Paar von Feinblech-Elementen (32, 34) und einer Befestigungseinrichtung (110) nach irgendeinem der vorhergehenden Ansprüche.

11. Kombination nach Anspruch 10, wobei:
das Paar von Feinblech-Elementen (32, 34) Schienen- (48, 50) und Pfostenelemente (46) umfasst, um ein Wandgefüge zu errichten.

12. Kombination nach Anspruch 11, wobei:
jedes der Schienen- (48, 50) und Pfostenelemente (46) eine im Wesentlichen U-förmige Querschnittskonfiguration aufweist, die ein Grundbahnelement (54, 58, 64) und ein Paar von Seitenelementen (52, 56, 60, 62, 66, 68) aufweist.

13. Kombination nach Anspruch 12, wobei:
im montierten Zustand die Grundbahnelemente (54) der Pfostenelemente (46) an den Seitenelementen (60, 62, 66, 68) der Schienenelemente (48, 50) befestigt sind und das Wandgefüge umfassen.

## Revendications

1. Attache (110) pour attacher ensemble une paire d'organes métalliques en tôle de mince épaisseur (32, 34), comprenant :
une portion d'extrémité pointue (112) pour former des ouvertures (36, 38) dans les organes métalliques en tôle de mince épaisseur alors que ladite attache est enfoncée à travers les organes métalliques en tôle de mince épaisseur ;
une portion de tête (116) ; et
une portion de tige (114) interposée entre ladite portion d'extrémité pointue et ladite portion de tête et définie autour d'un axe longitudinal (118) ;
ladite portion de tige comprenant une portion de tige à filetage hélicoïdal (122) s'étendant depuis une première position axiale, disposée immédiatement en amont de ladite portion d'extrémité pointue, jusqu'à une deuxième position axiale substantiellement adjacente à ladite portion de tête, et comprenant une pluralité de filets hélicoïdaux (126) espacés circonférentiellement disposés sur ladite portion de tige à filetage hélicoïdal, de telle sorte que chacun de ladite pluralité de filets hélicoïdaux espacés circonférentiellement s'étende substantiellement depuis ladite première position axiale jusqu'à ladite deuxième position axiale, et suivant un angle prédéterminé par rapport audit axe longitudinal de ladite portion de tige, pour former des filets correspondants sur des portions de parois annulaires (28, 30) des organes métalliques en tôle de mince épaisseur, qui entourent les ouvertures définies dans les organes métalliques en tôle de mince épaisseur, suite à l'insertion de ladite portion d'extrémité pointue de ladite attache à travers les organes métalliques en tôle de mince épaisseur, et une pluralité de réseaux de pointes substantiellement linéaires (140) formés sur ladite pluralité de filets hélicoïdaux espacés circonférentiellement disposés sur ladite portion de tige à filetage hélicoïdal, pour s'engager avec les portions de parois annulaires des organes métalliques en tôle de mince épaisseur qui entourent les ouvertures définies dans les organes métalliques en tôle de mince épaisseur de manière à effectivement verrouiller ladite attache dans les organes métalliques en tôle de mince épaisseur et à améliorer la résistance à la traction de ladite attache par rapport aux organes métalliques en tôle de mince épaisseur de manière à attacher solidement les organes métalliques en tôle de mince épaisseur l'un à l'autre,
**caractérisée en ce que** la pluralité de réseaux de pointes substantiellement linéaires sont formés uniquement sur des régions axialement vers l'arrière de ladite pluralité de filets hélicoïdaux espacés circonférentiellement disposés sur ladite portion de tige à filetage hélicoïdal (124), qui s'étendent depuis une troisième portion axiale entre lesdites première et deuxième positions axiales, jusqu'à ladite deuxième position axiale substantiellement à côté de ladite portion de tête.

2. Attache (110) selon la revendication 1, dans laquelle :
ladite portion d'extrémité pointue de ladite attache a une configuration en ogive.

3. Attache (110) selon la revendication 2, dans laquelle :
ladite configuration en ogive est choisie parmi le groupe comprenant une ogive tangente et une ogive sécante.

4. Attache (110) selon l'une quelconque des revendications précédentes, dans laquelle :
ladite pluralité de filets hélicoïdaux (126), comprenant ladite portion de tige à filetage hélicoïdal (122), sont disposés suivant un angle prédéterminé, par rapport audit axe longitudinal (118) de ladite portion de tige, qui est compris dans la plage de 15 à 20°.

5. Attache (110) selon l'une quelconque des revendications précédentes, dans laquelle :
ladite pluralité de réseaux de pointes (140) sont disposés dans des portions de base (142) de ladite portion de tige à filetage hélicoïdal (124) de ladite attache afin d'être interposés entre des portions d'arêtes (144) de ladite portion de tige à filetage hélicoïdal de ladite attache.

6. Attache (110) selon la revendication 4, dans laquelle :
chacun desdits réseaux de pointes (140) comprend un réseau hélicoïdal, chaque portion hélicoïdale dudit réseau hélicoïdal de pointes étant disposée suivant un angle prédéterminé (B), par rapport audit axe longitudinal (118) de ladite portion de tige, qui est compris dans la plage de 70 à 75°, de manière à être substantiellement perpendiculaire à ladite pluralité de filets hélicoïdaux (126).

7. Attache (110) selon la revendication 6, dans laquelle :
chacune desdites pointes (140) a une configuration substantiellement triangulaire comprenant une surface inférieure inclinée radialement vers l'intérieur et axialement vers l'avant (148), pour faciliter l'insertion axiale de ladite portion de tige hélicoïdale (122) de ladite attache au-delà des portions de parois annulaires (28, 30) des organes métalliques en tôle de mince épaisseur (32, 34), et une surface de base supérieure inclinée radialement vers l'intérieur, axialement vers l'arrière (146), pour définir une portion d'épaulement étagée sur laquelle l'une des portions de parois annulaires des organes métalliques en tôle de mince épaisseur est prévue pour s'appuyer de manière à fixer par verrouillage ladite attache dans les organes métalliques en tôle de mince épaisseur et à empêcher aisément un retrait par traction de ladite attache par rapport aux organes métalliques en tôle de mince épaisseur et donc pour attacher fixement les organes métalliques en tôle de mince épaisseur l'un à l'autre.

8. Attache (110) selon la revendication 7, dans laquelle :
chacune desdites surfaces inférieures inclinées radialement vers l'intérieur et axialement vers l'avant (148) desdites pointes (140) est disposée de manière inclinée radialement vers l'intérieur dans une disposition vers l'avant suivant un angle prédéterminé (D) par rapport audit axe longitudinal (118) de ladite portion de tige de ladite attache, qui vaut approximativement 45° ; et
chacune desdites surfaces de base supérieures inclinées radialement vers l'intérieur et axialement vers l'arrière (146) desdites pointes est disposée de manière inclinée radialement vers l'intérieur dans une disposition vers l'arrière suivant un angle prédéterminé (C) par rapport audit axe longitudinal de ladite portion de tige de ladite attache, qui vaut approximativement 0 à 10°.

9. Attache (110) selon la revendication 7 ou 8, dans laquelle :
une paire desdites surfaces de base supérieures axialement vers l'arrière (146) définit ensemble une paire desdites portions d'épaulement étagées sur lesquelles les deux portions de parois annulaires (28, 30) des organes métalliques en tôle de mince épaisseur (32, 34) sont prévues pour s'appuyer de manière à effectivement doubler les forces de résistance à la traction qui fixent par verrouillage ladite attache dans les organes métalliques en tôle de mince épaisseur et qui empêchent aisément le retrait de ladite attache par rapport aux organes métalliques en tôle de mince épaisseur de manière à ainsi attacher fixement les organes métalliques en tôle de mince épaisseur l'un à l'autre.

10. Combinaison d'une paire d'organes métalliques en tôle de mince épaisseur (32, 34) et d'une attache (110) selon l'une quelconque des revendications précédentes.

11. Combinaison selon la revendication 10, dans laquelle :
ladite paire d'organes métalliques en tôle de mince épaisseur (32, 34) comprend des organes de glissière (48, 50) et de poteau (46) pour ériger une structure de mur.

12. Combinaison selon la revendication 11, dans laquelle :
chacun desdits organes de glissière (48, 50) et de poteau (46) a une configuration en section transversale substantiellement en forme de U, comprenant un organe de bande de base (54, 58, 64) et une paire d'organes latéraux (52, 56, 60, 62, 66, 68).

13. Combinaison selon la revendication 12, dans laquelle :
dans l'état monté, les organes de bande de base (54) desdits organes de poteau (46) sont attachés auxdits organes latéraux (60, 62, 66, 68) desdits organes de glissière (48, 50) constituant ladite structure de mur.
